# EUROPEAN PATENT SPECIFICATION

(11) **EP 3 677 133 B1**
(45) Date of publication and mention of the grant of the patent: **14.12.2022**
(21) Application number: 18870107.2
(22) Date of filing: 26.10.2018
(51) Int. Cl.: G05B 19/042, A24F 47/00, A24F 40/05, A24F 40/50

(54) **ULTRASONIC ATOMIZATION SHEET OSCILLATION CONTROL CIRCUIT AND ULTRASONIC ELECTRONIC CIGARETTE**
OSZILLATIONSSTEUERKREIS EINES ULTRASCHALLZERSTÄUBUNGSBLATTES UND ELEKTRONISCHE ULTRASCHALLZIGARETTE
CIRCUIT DE COMMANDE D'OSCILLATION DE FEUILLE D'ATOMISATION ULTRASONORE ET CIGARETTE ÉLECTRONIQUE ULTRASONORE

(30) Priority: 27.10.2017 CN 201721396980 U; 07.12.2017 CN 201721684382 U; 11.02.2018 CN 201820245781 U
(43) Date of publication of application: 08.07.2020
(73) Proprietor: China Tobacco Hunan Industrial Co., Ltd., Changsha, Hunan 410007 (CN)
(72) Inventor: LIU, Jianfu, Changsha Hunan 410007 (CN); ZHONG, Kejun, Changsha Hunan 410007 (CN); GUO, Xiaoyi, Changsha Hunan 410007 (CN); HUANG, Wei, Changsha Hunan 410007 (CN); YU, Hong, Changsha Hunan 410007 (CN); DAI, Yuangang, Changsha Hunan 410007 (CN); YIN, Xinqiang, Changsha Hunan 410007 (CN); YI, Jianhua, Changsha Hunan 410007 (CN); LI, Shengbo, Changsha Hunan 410007 (CN); SHEN, Kaiwei, Changsha Hunan 410007 (CN)
(74) Representative: Kramer Barske Schmidtchen Patentanwälte PartG mbB
(86) International application number: PCT/CN2018/112153
(87) International publication number: WO 2019/080932

(56) References cited:
- CN-U- 206 043 446
- CN-U- 206 043 446
- CN-U- 206 043 447
- CN-U- 206 258 688
- CN-U- 206 482 028
- CN-U- 207 319 008
- CN-U- 207 574 531
- CN-U- 207 885 673
- KR-A- 20120 103 351
- US-A1- 2004 242 171

## Description

### Field of the Invention

The present invention belongs to the technical field of electronic cigarettes, and particularly relates to an ultrasonic atomization sheet oscillation control circuit and an ultrasonic electronic cigarette.

### Background of the Invention

There are two types of existing ultrasonic atomization sheet oscillation control circuits. The first type controls the unilateral oscillation of an ultrasonic atomization sheet by using one path of PWM waves, and includes a microprocessor and a first drive oscillation circuit, wherein an output end of the microprocessor is electrically connected to one end of the ultrasonic atomization sheet through the first drive oscillation circuit. The second type controls the bilateral oscillation of an ultrasonic atomization sheet by using two paths of PWM waves, for example CN 206043446 U, wherein a second drive oscillation circuit is added based on the first type of oscillation control circuit, a first output end of the microprocessor is electrically connected to a first end of the ultrasonic atomization sheet through the first drive oscillation circuit, a second output end of the microprocessor is electrically connected to a second end of the ultrasonic atomization sheet through the second drive oscillation circuit, and the microprocessor simultaneously outputs two paths of complementary PWM waves to control the ultrasonic atomization sheet to oscillate bilaterally.

The existing ultrasonic atomization sheet oscillation control circuits have the following disadvantages:
First, in the bilateral oscillation structure, the microprocessor is required to simultaneously output two paths of complementary PWM waves, which limits the selection range of the microprocessor, therefore the use cost is increased.
Second, the ultrasonic atomization sheet in the existing oscillation control circuit has only one operating mode, that is, simple unilateral oscillation or simple bilateral oscillation, so its rated power is constant and non-adjustable. At the same time, a polar ultrasonic atomization sheet can only oscillate unilaterally, and a non-polar ultrasonic atomization sheet can oscillate bilaterally, so the oscillation control circuit for the ultrasonic atomization sheet in bilateral oscillation is not applicable to the polar ultrasonic atomization sheet. Hence, the existing ultrasonic atomization sheet oscillation control circuits are not applicable to different types of ultrasonic atomization sheets, and cannot meet the usage requirements of different user groups.
Third, since only one ultrasonic atomization sheet is provided in the existing ultrasonic electronic cigarette, the ultrasonic atomization sheet oscillates repeatedly during operation. The ultrasonic atomization sheet is a consumable product, and is short in life and easy to burn out due to high temperature, overcurrent and the like, so the ultrasonic atomization sheet is often damaged and cannot generate smoke, which affects the user experience. In addition, the ultrasonic atomization sheet operates with a large amount of atomization for a long time, and its operating efficiency will decrease over time, so the atomization amount of the ultrasonic atomization sheet may be too small, the generated smoke will be reduced, and the user experience will be affected.

US 2004242171 discloses the usage of a phase inverter which splits a single PWM signal 1 into two complementary PWM signals to command MOS transistors N1-N4.

### Summary of the Invention

The present invention aims to provide an ultrasonic atomization sheet oscillation control circuit according to independent claim 1 and an ultrasonic electronic cigarette for the shortcomings in the prior art.

In order to solve the technical problem that the microprocessor is required to simultaneously output two paths of complementary PWM waves, the technical solution adopted by the present invention is defined in claim 1. Further developments of the invention are given in the dependent claims.

An ultrasonic atomization sheet oscillation control circuit, including a microprocessor, a first drive oscillation circuit and a second drive oscillation circuit, wherein an output end of the first drive oscillation circuit is electrically connected to a first end of a first ultrasonic atomization sheet, an output end of the second drive oscillation circuit is electrically connected to a second end of the first ultrasonic atomization sheet, characterized in that the ultrasonic atomization sheet oscillation control circuit further includes a first phase inverter, an input end of the first phase inverter and an input end of the second drive oscillation circuit are both electrically connected to a first output end of the microprocessor, and an output end of the first phase inverter is electrically connected to an input end of the first drive oscillation circuit.

With the above structure, the output end of the microprocessor is electrically connected to the input end of the second drive oscillation circuit, and the output end of the microprocessor is electrically connected to the input end of the first drive oscillation circuit through the first phase inverter, so one path of PWM wave output by the microprocessor is converted into two paths of complementary PWM waves for controlling the operation of the first drive oscillation circuit and the second drive oscillation circuit, respectively. It can be seen that in the present invention, the microprocessor only needs to output one path of PWM wave to control the first ultrasonic atomization sheet to oscillatebilaterally, so no special requirement is needed for the type of the microprocessor, and the use cost is reduced.

Further, the ultrasonic atomization sheet oscillation control circuit includes a mutual exclusion circuit for outputting two paths of signal levels that are complementary with each other, wherein the output end of the first phase inverter is electrically connected to the input end of the first drive oscillation circuit through the mutual exclusion circuit, and the first output end of the microprocessor is electrically connected to the input end of the second drive oscillation circuit through the mutual exclusion circuit.

In order to eliminate the dead zone interference in the microprocessor and the delay effect of the first phase inverter, a mutual exclusion circuit is added, which can ensure that the two paths of signals transmitted to the first drive oscillation circuit and the second drive oscillation circuit are complementary signals, so that no smoke emission caused by simultaneous turn-on of the first drive oscillation circuit and the second drive oscillation circuit is prevented, the smoke emission amount of the first ultrasonic atomization sheet is more stable, and the user experience is good.

The mutual exclusion circuit includes a second phase inverter, a third phase inverter, a first OR gate, and a second OR gate; the output end of the first phase inverter and an output end of the second phase inverter are both electrically connected to an input end of the second OR gate, and an output end of the second OR gate is electrically connected to the input end of the first drive oscillation circuit through the third phase inverter; the first output end of the microprocessor and an output end of the third phase inverter are both electrically connected to an input end of the first OR gate, and an output end of the first OR gate is electrically connected to the input end of the second drive oscillation circuit through the second phase inverter.

Further, in order to solve the technical problem that the ultrasonic atomization sheet can only operate in one operating mode, the technical solution adopted by the present invention is that the ultrasonic atomization sheet oscillation control circuit further includes a switching circuit for controlling whether the first drive oscillation circuit operates, wherein a second output end of the microprocessor is electrically connected to a control end of the switching circuit, and an output end of the switching circuit is electrically connected to the first drive oscillation circuit.

With the above structure, the controller controls whether the first drive oscillation circuit operates through the switching circuit. When the controller controls the first drive oscillation circuit to operate through the switching circuit, both the first drive oscillation circuit and the second drive oscillation circuit operate, and the first ultrasonic atomization sheet operates in a bilateral oscillation mode, with high power and large amount of smoke, so that the oscillation control circuit is suitable for a non-polar ultrasonic atomization sheet. When the controller controls the first drive oscillation circuit not to operate through the switching circuit, only the second drive oscillation circuit operates, and the first ultrasonic atomization sheet operates in a unilateral oscillation mode, with low power and small amount of smoke, so that the oscillation control circuit is suitable for a polar ultrasonic atomization sheet. It can be seen that, in the presence of the switching circuit, the operating mode of the first ultrasonic atomization sheet can be selected according to the user's need, and the corresponding operating mode can also be selected according to the type of the first ultrasonic atomization sheet, so the application range is wide.

As a preferred mode, the first drive oscillation circuit includes an amplifier, a first resistor, a first MOS transistor, a first inductor, and a first capacitor; the output end of the first phase inverter is electrically connected to a first input end of the amplifier, a first output end of the amplifier is electrically connected to a gate of the first MOS transistor through the first resistor, a source of the first MOS transistor is grounded, and a drain of the first MOS transistor, one end of the first inductor, and one end of the first capacitor are all electrically connected to the first end of the first ultrasonic atomization sheet; the other end of the first inductor is electrically connected to a positive pole of a power supply, and the other end of the first capacitor is grounded.

As a preferred mode, the second drive oscillation circuit includes an amplifier, a second resistor, a second MOS transistor, a second inductor, and a second capacitor; the output end of the microprocessor is electrically connected to a second input end of the amplifier, a second output end of the amplifier is electrically connected to a gate of the second MOS transistor through the second resistor, a source of the second MOS transistor is grounded, and a drain of the second MOS transistor, one end of the second inductor, and one end of the second capacitor are all electrically connected to the second end of the first ultrasonic atomization sheet; the other end of the second inductor is electrically connected to the positive pole of the power supply, and the other end of the second capacitor is grounded.

Further, the ultrasonic atomization sheet oscillation control circuit includes a power module, wherein a power source end of the first drive oscillation circuit and a power source end of the second drive oscillation circuit are both electrically connected to an output end of the power module.

As a preferred mode, the power module includes a single lithium battery and a boost module, an output end of the single lithium battery is electrically connected to an input end of the boost module, and an output end of the boost module is the output end of the power module.

The voltage of the single lithium battery is boosted to the voltage required by the first ultrasonic atomization sheet through the boost module, which can simplify the circuit and reduce the cost.

As a preferred mode, the switching circuit includes a third MOS transistor, a fourth MOS transistor, a third resistor, a fourth resistor and a fifth resistor, one end of the third resistor and a drain of the third MOS transistor are connected to the positive pole of the power supply, the other end of the third resistor and a gate of the third MOS transistor are both connected to a drain of the fourth MOS transistor through the fourth resistor, a source of the third MOS transistor is connected to the first drive oscillation circuit, a gate of the fourth MOS transistor and one end of the fifth resistor are both connected to the third output end of the control circuit, and a source of the fourth MOS transistor and the other end of the fifth resistor are both grounded.

Further, the ultrasonic atomization sheet oscillation control circuit includes a power module, wherein the power module includes a boost chip, a third capacitor, a fourth capacitor and a fifth capacitor; an input end of the boost chip and one end of the third capacitor are both electrically connected to the positive pole of the power supply, and an output end of the boost chip, one end of the fourth capacitor, and one end of the fifth capacitor are all electrically connected to a power end of the amplifier; and a ground end of the boost chip, the other end of the third capacitor, the other end of the fourth capacitor, and the other end of the fifth capacitor are all grounded.

Further, in order to solve the technical problems that the ultrasonic atomization sheet is easily damaged and the operating efficiency declines rapidly, the technical solution adopted by the present invention is that the ultrasonic atomization sheet oscillation control circuit further includes a second ultrasonic atomization sheet and a third drive oscillation circuit, wherein a third output end of the microprocessor is electrically connected to a first end of the second ultrasonic atomization sheet through the third drive oscillation circuit, and a second end of the second ultrasonic atomization sheet is grounded.

With the above structure, the present invention includes a first ultrasonic atomization sheet and a second ultrasonic atomization sheet, and the two ultrasonic atomization sheets can resonate respectively. The present invention has two operating modes: In the first operating mode, only one ultrasonic atomization sheet oscillates at the same time, and in this operating mode, when one ultrasonic atomization sheet is damaged or cannot emit smoke due to other situations (such as over-temperature protection or over-current protection), the other ultrasonic atomization sheet can be switched in time to operate, which avoids the situation that no smoke is emitted. In the second operating mode, two ultrasonic atomization sheets operate simultaneously with a small atomization amount smaller than a rated atomization amount, which can prolong the service lives of single ultrasonic atomization sheets; If the atomization amount of one ultrasonic atomization sheet is decreased, the atomization amount of the other ultrasonic atomization sheet can be increased accordingly, so that the overall smoke output is kept unchanged, and the use quality of the electronic cigarette is improved. The atomization amount refers to the amount of smoke generated by oscillation of the ultrasonic atomization sheet per unit time.

Further, the ultrasonic atomization sheet oscillation control circuit includes a first power detection circuit for detecting the operating power of the first ultrasonic atomization sheet, wherein an output end of the first power detection circuit is electrically connected to the first input end of the microprocessor.

Further, the ultrasonic atomization sheet oscillation control circuit includes a second power detection circuit for detecting the operating power of the second ultrasonic atomization sheet, wherein an output end of the second power detection circuit is electrically connected to the second input end of the microprocessor.

With the above structure, if one path of ultrasonic atomization sheet does not emit smoke due to damage or the smoke decreases due to loss, the corresponding power detection circuit can detect this and send the detection result to the microprocessor, and the microprocessor can keep the overall smoke output constant by increasing the oscillation frequency of the other ultrasonic atomization sheet, thereby improving the quality and life of the electronic cigarette.

Based on the same inventive concept, the present invention also provides an ultrasonic electronic cigarette, including the above-mentioned ultrasonic atomization sheet oscillation control circuit.

Compared with the prior art, the present invention has the following advantages:
First, the bilateral oscillation of the first ultrasonic atomization sheet is achieved by the microprocessor that outputs only one path of PWM wave, no special requirement is needed for the type of the microprocessor, and the use cost is reduced; at the same time, the first drive oscillation circuit and the second drive oscillation circuit are not turned on at the same time, so the operation is reliable, the smoke output is stable, and the user experience is good.
Second, the first ultrasonic atomization sheet can be switched freely between a unilateral operating mode and a bilateral oscillation operating mode, which can adjust the rated power of the product, so that the product is suitable for different types of ultrasonic atomization sheets, can meet the use requirements of different user groups, and has a wider application range.
Third, when one of the first ultrasonic atomization sheet or the second ultrasonic atomization sheet is damaged, the other normal ultrasonic atomization sheet can be switched in time to operate, which avoid the situation that smoke cannot be emitted; when the two ultrasonic atomization sheets operate simultaneously, the two ultrasonic atomization sheets can operate with a small atomization amount smaller than a rated atomization amount, which can prolong the service lives of single ultrasonic atomization sheets; and when the atomization amount of one ultrasonic atomization sheet is decreased, the atomization amount of the other ultrasonic atomization sheet can be increased accordingly, so that the overall smoke output is kept unchanged, and the use quality of the electronic cigarette is improved.

### Brief Description of the Drawings

FIG. 1 is a structural block diagram of Embodiment 1 of an ultrasonic atomization sheet oscillation control circuit.
FIG. 2 is a circuit diagram of Embodiment 1 of the ultrasonic atomization sheet oscillation control circuit after a microprocessor is removed.
FIG. 3 is a structural block diagram of Embodiment 2 of an ultrasonic atomization sheet oscillation control circuit.
FIG. 4 is a circuit diagram of Embodiment 2 of the ultrasonic atomization sheet oscillation control circuit after a control circuit is removed.
FIG. 5 is a structural block diagram of Embodiment 3 of an ultrasonic atomization sheet oscillation control circuit.
FIG. 6 is a structural block diagram of Embodiment 2 of the ultrasonic atomization sheet oscillation control circuit.

In which, 1 microprocessor, 2 first drive oscillation circuit, 3 second drive oscillation circuit, 4 first phase inverter, 5 power module, 501 single lithium battery, 502 boost module, 6 mutual exclusion circuit, 7 switching circuit, 8 third drive oscillation circuit, 9 first power detection circuit, 10 second power detection circuit, 11 control circuit, J1 first ultrasonic atomization sheet, J2 second ultrasonic atomization sheet, L1 first inductor, L2 second inductor, C1 first capacitor, C2 second capacitor, C3 third capacitor, C4 fourth capacitor, C5 fifth capacitor, R1 first resistor, R2 second resistor, R3 third resistor, R4 fourth resistor, R5 fifth resistor, Q1 first MOS transistor, Q2 second MOS transistor, Q3 third MOS transistor, Q4 fourth MOS transistor, U1 amplifier, U2 second phase inverter, U3 first OR gate, U4 third phase inverter, U5 second OR gate, U6 boost chip.

### Detailed Description of Embodiments

### Embodiment 1

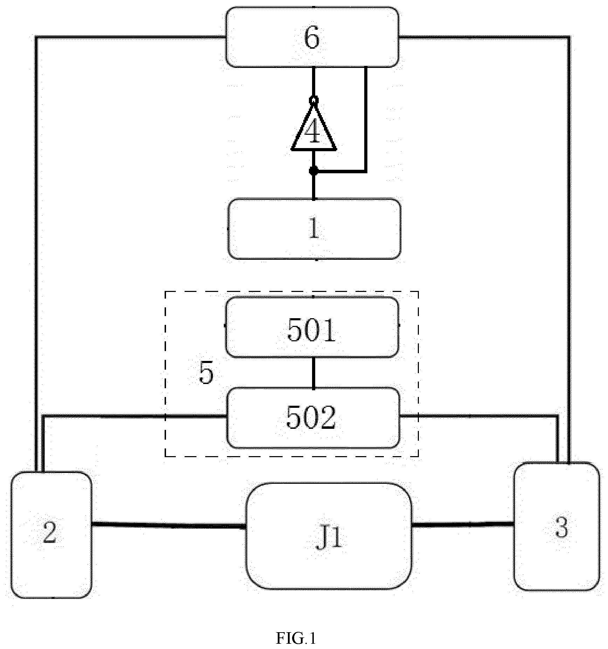

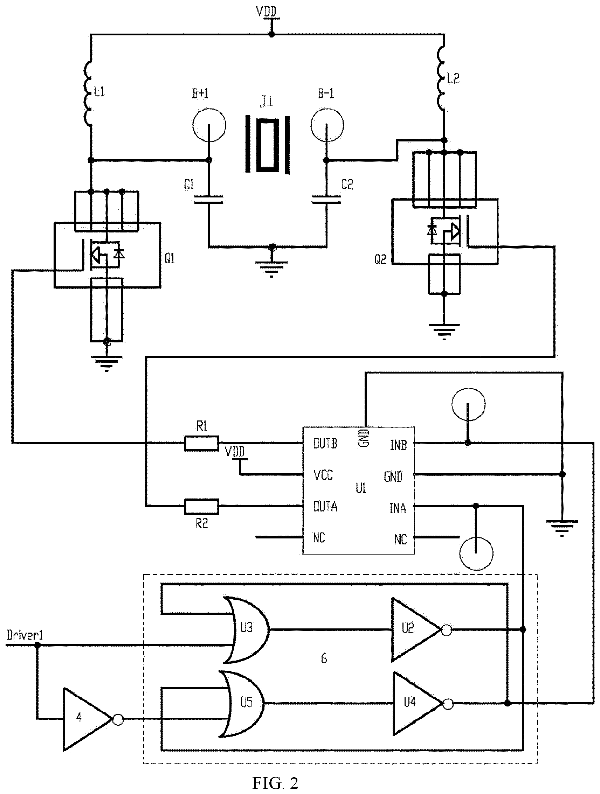

As shown in FIG. 1 and FIG. 2, an ultrasonic atomization sheet oscillation control circuit of an ultrasonic electronic cigarette includes a microprocessor 1, a first drive oscillation circuit 2 and a second drive oscillation circuit 3, an output end of the first drive oscillation circuit 2 is electrically connected to a first end of a first ultrasonic atomization sheet J1, an output end of the second drive oscillation circuit 3 is electrically connected to a second end of the first ultrasonic atomization sheet J1, the ultrasonic atomization sheet oscillation control circuit further includes a first phase inverter 4, an input end of the first phase inverter 4 and an input end of the second drive oscillation circuit 3 are both electrically connected to a first output end of the microprocessor 1, and an output end of the first phase inverter 4 is electrically connected to an input end of the first drive oscillation circuit 2.

The ultrasonic atomization sheet oscillation control circuit further includes a mutual exclusion circuit 6 for outputting two paths of signal levels that are complementary with each other, the output end of the first phase inverter 4 is electrically connected to the input end of the first drive oscillation circuit 2 through the mutual exclusion circuit 6, and the first output end of the microprocessor 1 is electrically connected to the input end of the second drive oscillation circuit 3 through the mutual exclusion circuit 6. The mutual exclusion circuit 6 includes a second phase inverter U2, a third phase inverter U4, a first OR gate U3, and a second OR gate U5; the output end of the first phase inverter 4 and an output end of the second phase inverter U2 are both electrically connected to an input end of the second OR gate U5, and an output end of the second OR gate U5 is electrically connected to the input end of the first drive oscillation circuit 2 through the third phase inverter U4; the first output end of the microprocessor 1 and an output end of the third phase inverter U4 are both electrically connected to an input end of the first OR gate U3, and an output end of the first OR gate U3 is electrically connected to the input end of the second drive oscillation circuit 3 through the second phase inverter U2.

The first drive oscillation circuit 2 includes an amplifier U1, a first resistor R1, a first MOS transistor Q1, a first inductor L1, and a first capacitor C1; the output end of the first phase inverter 4 is electrically connected to a first input end of the amplifier U1, a first output end of the amplifier U1 is electrically connected to a gate of the first MOS transistor Q1 through the first resistor R1, a source of the first MOS transistor Q1 is grounded, and a drain of the first MOS transistor Q1, one end of the first inductor L1, and one end of the first capacitor C1 are all electrically connected to the first end of the first ultrasonic atomization sheet J1; the other end of the first inductor L1 is electrically connected to a positive pole of a power supply, and the other end of the first capacitor C1 is grounded.

The second drive oscillation circuit 3 includes an amplifier U1, a second resistor R2, a second MOS transistor Q2, a second inductor L2, and a second capacitor C2; the output end of the microprocessor 1 is electrically connected to a second input end of the amplifier U1, a second output end of the amplifier U1 is electrically connected to a gate of the second MOS transistor Q2 through the second resistor R2, a source of the second MOS transistor Q2 is grounded, and a drain of the second MOS transistor Q2, one end of the second inductor L2, and one end of the second capacitor C2 are all electrically connected to the second end of the first ultrasonic atomization sheet J1; the other end of the second inductor L2 is electrically connected to the positive pole of the power supply, and the other end of the second capacitor C2 is grounded.

The mutual exclusion circuit 6 can effectively ensure that the two MOS transistors (the first MOS transistor Q1 and the second MOS transistor Q2) are not turned on at the same time, thereby ensuring stable emission of smoke.

The ultrasonic atomization sheet oscillation control circuit further includes a power module 5, and a power end of the first drive oscillation circuit 2 and a power end of the second drive oscillation circuit 3 are both electrically connected to an output end of the power module 5.

The power module includes a single lithium battery 501 and a boost module 502, an output end of the single lithium battery 501 is electrically connected to an input end of the boost module 502, and an output end of the boost module 502 is the output end of the power module 5.

The first ultrasonic atomization sheet J1 is a piezoelectric ceramic atomization sheet.

As shown in FIG. 1, in this embodiment, the power circuit 5 is composed of a single lithium battery charge-discharge protection circuit and a boost circuit, has overcharge and overvoltage protection functions, and simultaneously prevents overcurrent and short circuit of back-end circuits. The power module 5 provides power of about 30 W for back-end high-frequency excited bilateral oscillation circuits by means of boosting of the single lithium battery 501.

The microprocessor 1 controls the indication of LED lamps and the on and off of the MOS transistors through a 51-core single chip microcomputer to realize low power consumption and safety protection of the entire circuit board, and detects the voltage and current changes of the first ultrasonic atomization sheet J1 in real time to prevent dry burning and overload of the first ultrasonic atomization sheet J1, also provides PWM signals for back-end drive circuits, and tracks the frequency in real time through a power detection circuit.

The first phase inverter 4 converts one path of PWM waves output by the microprocessor to a signal level complementary to the original PWM waves, and then two paths of PWM waves are simultaneously output to the oscillation circuits to control the bilateral oscillation of the first ultrasonic atomization sheet J1.

The mutual exclusion circuit 6 is used to eliminate dead zone interference of the microprocessor and delay of the first phase inverter 4.

The two drive oscillation circuits resonate through the inductors and capacitors connected thereto and the static capacitance of the first ultrasonic atomization sheet J1 itself to form sine waves, thereby effectively driving the atomization sheet J1 to oscillate to atomize e-liquid.

As shown in FIG. 2, the specific operating principle of this embodiment is as follows: Driver1 is a single path drive signal outputted by the microprocessor 1, the signal is directly input to the first OR gate U3, at the same time, the signal is converted into a complementary PWM wave with opposite signal level by the first phase inverter 4, and the complementary PWM wave is input to the second OR gate U5. The second phase inverter U2, the first OR gate U3, the third phase inverter U4, and the second OR gate U5 form a mutual exclusion circuit of PWM waves. When any path of output in the second phase inverter U2 or the third phase inverter U4 is a high level signal, the signal of the other path that passes through the OR gate and the phase inverter after sampling is bound to output a low level, which can prevent two paths simultaneously output a high level and the two MOS transistors are simultaneously turned on due to the dead zone interference inside the microprocessor 1 and the delay of the first phase inverter 4, which may cause abnormal oscillation of the first ultrasonic atomization sheet J1 or overcurrent burnout of hardware circuits.

Subsequently, the amplifier U1 amplifies the drive signal, and then the first MOS transistor Q1 and the second MOS transistor Q2 are switched on and off alternately under the control of the PWM waves, so that the first ultrasonic atomization sheet J1 and the inductors and capacitors resonate to oscillate the e-liquid to generate smoke.

### Embodiment 2

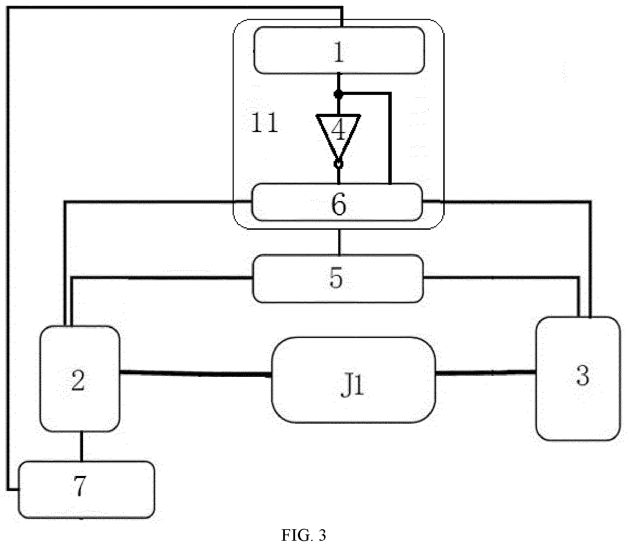

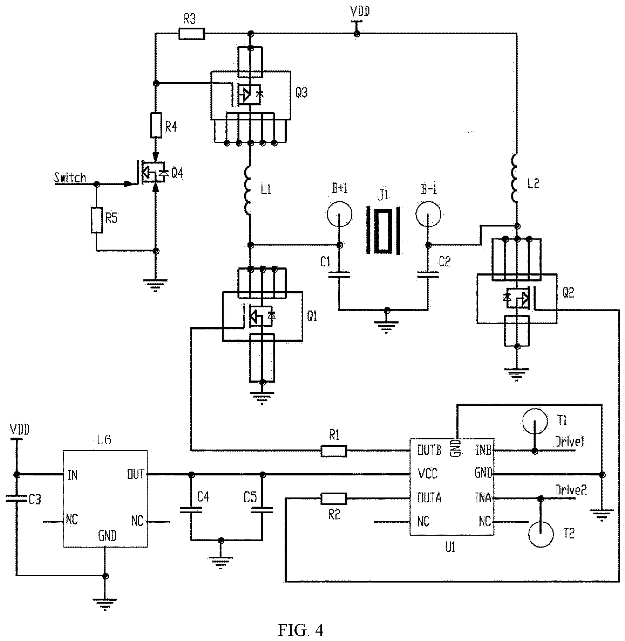

As shown in FIG. 3 and FIG. 4, an ultrasonic atomization sheet oscillation control circuit of an ultrasonic electronic cigarette includes a microprocessor 1, a first drive oscillation circuit 2 and a second drive oscillation circuit 3, an output end of the first drive oscillation circuit 2 is electrically connected to a first end of a first ultrasonic atomization sheet J1, an output end of the second drive oscillation circuit 3 is electrically connected to a second end of the first ultrasonic atomization sheet J1, the ultrasonic atomization sheet oscillation control circuit further includes a first phase inverter 4, an input end of the first phase inverter 4 and an input end of the second drive oscillation circuit 3 are both electrically connected to a first output end of the microprocessor 1, and an output end of the first phase inverter 4 is electrically connected to an input end of the first drive oscillation circuit 2.

The ultrasonic atomization sheet oscillation control circuit further includes a mutual exclusion circuit 6 for outputting two paths of signal levels that are complementary with each other, the output end of the first phase inverter 4 is electrically connected to the input end of the first drive oscillation circuit 2 through the mutual exclusion circuit 6, and the first output end of the microprocessor 1 is electrically connected to the input end of the second drive oscillation circuit 3 through the mutual exclusion circuit 6.

The microprocessor 1, the first phase inverter 4, and the mutual exclusion circuit 6 form a control circuit 11, wherein a first output end of the mutual exclusion circuit 6 is the first output end of the control circuit 11, a second output end of the mutual exclusion circuit 6 is the second output end of the control circuit 11, and a second output end of the microprocessor 1 is the third output end of the control circuit 11.

The first output end of the control circuit 11 is electrically connected to the first end of the first ultrasonic atomization sheet J1 through the first drive oscillation circuit 2, and the second output end of the control circuit 11 is electrically connected to the second end of the first ultrasonic atomization sheet J1 through the second drive oscillation circuit 3.

The ultrasonic atomization sheet oscillation control circuit further includes a switching circuit 7 for controlling whether the first drive oscillation circuit 2 operates, the third output end of the control circuit 11 is electrically connected to a control end of the switching circuit 7, and an output end of the switching circuit 7 is electrically connected to the first drive oscillation circuit 2.

The switching circuit 7 includes a third MOS transistor Q3, a fourth MOS transistor Q4, a third resistor R3, a fourth resistor R4, and a fifth resistor R5, one end of the third resistor R3 and a drain of the third MOS transistor Q3 are both connected to a positive pole of a power supply, the other end of the third resistor R3 and a gate of the third MOS transistor Q3 are both connected to a drain of the fourth MOS transistor Q4 through the fourth resistor R4, a source of the third MOS transistor Q3 is connected to the first drive oscillation circuit 2, a gate of the fourth MOS transistor Q4 and one end of the fifth resistor R5 are both connected to the third output end of the control circuit 11, and a source of the fourth MOS transistor Q4 and the other end of the fifth resistor R5 are both grounded.

The first drive oscillation circuit 2 includes an amplifier U1, a first resistor R1, a first MOS transistor Q1, a first inductor L1, and a first capacitor C1; the first output end of the control circuit 11 is electrically connected to a first input end of the amplifier U1, a first output end of the amplifier U1 is electrically connected to a gate of the first MOS transistor Q1 through the first resistor R1, a source of the first MOS transistor Q1 is grounded, and a drain of the first MOS transistor Q1, one end of the first inductor L1, and one end of the first capacitor C1 are all electrically connected to the first end of the first ultrasonic atomization sheet J1; the other end of the first inductor L1 is electrically connected to the source of the third MOS transistor Q3, and the other end of the first capacitor C1 is grounded.

The second drive oscillation circuit 3 includes an amplifier U1, a second resistor R2, a second MOS transistor Q2, a second inductor L2, and a second capacitor C2; the second output end of the control circuit 11 is electrically connected to a second input end of the amplifier U1, a second output end of the amplifier U1 is electrically connected to a gate of the second MOS transistor Q2 through the second resistor R2, a source of the second MOS transistor Q2 is grounded, and a drain of the second MOS transistor Q2, one end of the second inductor L2, and one end of the second capacitor C2 are all electrically connected to the second end of the first ultrasonic atomization sheet J1; the other end of the second inductor L2 is electrically connected to the positive pole of the power supply, and the other end of the second capacitor C2 is grounded.

The ultrasonic atomization sheet oscillation control circuit further includes a power module 5; the power module 5 includes a boost chip U6, a third capacitor C3, a fourth capacitor C4, and a fifth capacitor C5; an input end of the boost chip U6 and one end of the third capacitor C3 are both electrically connected to the positive pole of the power supply, and an output end of the boost chip U6, one end of the fourth capacitor C4, and one end of the fifth capacitor C5 are all electrically connected to a power source end of the amplifier U1; and a ground end of the boost chip U6, the other end of the third capacitor C3, the other end of the fourth capacitor C4, and the other end of the fifth capacitor C5 are all grounded.

The first ultrasonic atomization sheet J1 is a piezoelectric ceramic atomization sheet. In this embodiment, the power circuit 5 is composed of a single lithium battery charge -discharge protection circuit and a boost circuit, has an overcharge and overvoltage protection function, and simultaneously prevents overcurrent and short circuit of back-end circuits. The single lithium battery boost module boosts the single lithium battery to provide power of about 30 W for back-end high-frequency excited bilateral oscillation circuits.

The drive circuits amplify two paths of PWM signals provided to the control circuit 11 by the drive chip to drive the resonance of the inductors and capacitors in the high-frequency excited bilateral oscillation circuits and the first ultrasonic atomization sheet J1, so that the first ultrasonic atomization sheet J1 performs full-wave oscillation to achieve the optimal atomizing effect.

The control circuit 11 controls the indication of LED lamps and the on and off of the MOS transistors through a 51-core single chip microcomputer to realize low power consumption and safety protection of the entire circuit board, and detects the voltage and current changes of the first ultrasonic atomization sheet J1 in real time to prevent dry burning and overload of the first ultrasonic atomization sheet J1, also provides PWM signals for back-end drive circuits, and tracks the frequency in real time through a power detection circuit.

The switching circuit 7 controls the operation of the first drive oscillation circuit 2 under normal circumstances, the first ultrasonic atomization sheet J1 oscillates bilaterally, the Switch end of the control circuit 11 controls the fourth MOS transistor Q4 to be turned on, then the third MOS transistor Q3 is also turned on, andtwo paths of complementary PWM wave signals, which are outputted by the control circuit 11, are amplified by the drive circuits 11,and cooperate with the first inductor L1 and the second inductor L2 to oscillate alternately, thereby realizing bilateral oscillation of the first ultrasonic atomization sheet J1. At this time, the first ultrasonic atomization sheet J1 supporting oscillation is a non-polar ultrasonic atomization sheet with high rated power. When a polar ultrasonic atomization sheet is required by replacement or the power of the first ultrasonic atomization sheet J1 is reduced to meet the needs of different user groups, the Switch end can be pulled low by the control circuit 11, the third MOS transistor Q3 and the fourth MOS transistor Q4 are turned off, power is only supplied to the second inductor L2, at the same time, the signals output from the control circuit 11 to the drive circuits are one path of PWM wave (Drive2) and one path of high level (Drivel) such that the second MOS transistor Q2 is normally turned on and off to oscillate; The first MOS transistor Q1 is always turned on, so that the other pole of the first ultrasonic atomization sheet J1 is maintaingrounded, thereby achieving unilateral oscillation; and the rated power of the first ultrasonic atomization sheet J1 can be reduced to half that of the bilateral oscillation, thereby changing the product into a low-power electronic cigarette to meet the needs of different user groups.

### Embodiment 3

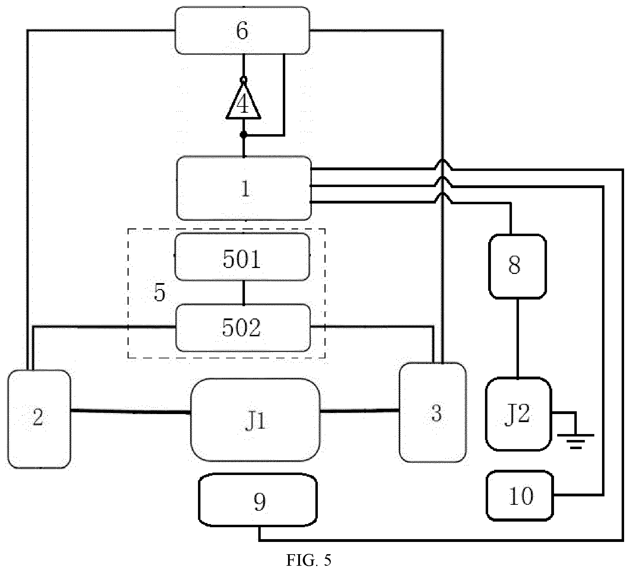

As shown in FIG. 5, the third embodiment of the ultrasonic atomization sheet oscillation control circuit is the same as the first embodiment, except that:
The third embodiment further includes a second ultrasonic atomization sheet J2 and a third drive oscillation circuit 8, a third output end of the microprocessor 1 is electrically connected to a first end of the second ultrasonic atomization sheet J2 through the third drive oscillation circuit 8, and a second end of the second ultrasonic atomization sheet J2 is grounded.

The third embodiment further includes a first power detection circuit 9 for detecting the operating power of the first ultrasonic atomization sheet J1, and an output end of the first power detection circuit 9 is electrically connected to the first input end of the microprocessor 1.

The third embodiment further includes a second power detection circuit 10 for detecting the operating power of the second ultrasonic atomization sheet J2, and an output end of the second power detection circuit 10 is electrically connected to the second input end of the microprocessor 1.

By using a redundant design in the third embodiment, the service lives of the ultrasonic atomization sheets J1 and J2 are prolonged, and the use cost is reduced.

### Embodiment 4

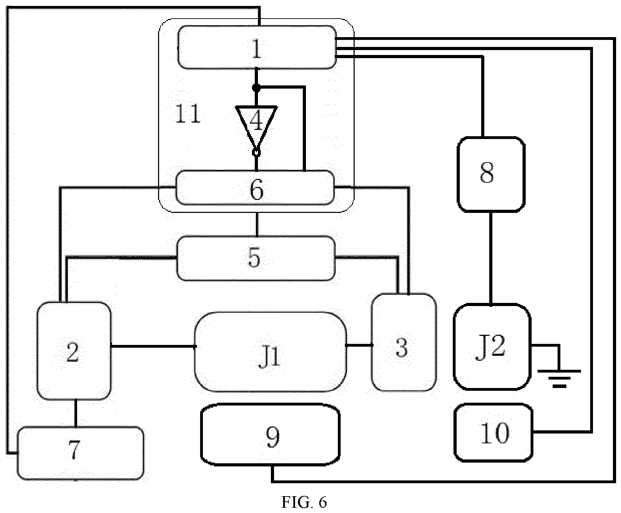

As shown in FIG. 6, the fourth embodiment of the ultrasonic atomization sheet oscillation control circuit is the same as the second embodiment, except that:
The fourth embodiment further includes a second ultrasonic atomization sheet J2 and a third drive oscillation circuit 8, a third output end of the microprocessor 1 is electrically connected to a first end of the second ultrasonic atomization sheet J2 through the third drive oscillation circuit 8, and a second end of the second ultrasonic atomization sheet J2 is grounded.

The fourth embodiment further includes a first power detection circuit 9 for detecting the operating power of the first ultrasonic atomization sheet J1, and an output end of the first power detection circuit 9 is electrically connected to the first input end of the microprocessor 1.

The fourth embodiment further includes a second power detection circuit 10 for detecting the operating power of the second ultrasonic atomization sheet J2, and an output end of the second power detection circuit 10 is electrically connected to the second input end of the microprocessor 1.

By using a redundant design in the fourth embodiment, the service lives of the ultrasonic atomization sheets J1 and J2 are prolonged, and the use cost is reduced.

The embodiments of the present invention are described above with reference to the drawings, but the present invention is not limited to the specific embodiments. The specific embodiments described above are merely illustrative but not restrictive. Many forms may also be made by those of ordinary skill in the art under the enlightenment of the present invention without departing from the purpose of the present invention and the scope of the claims, and these forms fall into the scope of the present invention.

## Claims

1. An ultrasonic atomization sheet oscillation control circuit, comprising a microprocessor (1), a first drive oscillation circuit (2), a second drive oscillation circuit (3), a first phase inverter (4), and a mutual exclusion circuit (6) for outputting two paths of signal levels that are complementary with each other, wherein an output end of the first drive oscillation circuit (2) is electrically connected to a first end of a first ultrasonic atomization sheet (J1), an output end of the second drive oscillation circuit (3) is electrically connected to a second end of the first ultrasonic atomization sheet (J1); an input end of the first phase inverter (4) and an input end of the second drive oscillation circuit (3) are both electrically connected to a first output end of the microprocessor (1), and an output end of the first phase inverter (4) is electrically connected to an input end of the first drive oscillation circuit (2); the output end of the first phase inverter (4) is electrically connected to the input end of the first drive oscillation circuit (2) through the mutual exclusion circuit (6), and the first output end of the microprocessor (1) is electrically connected to the input end of the second drive oscillation circuit (3) through the mutual exclusion circuit (6);
**characterized in that** the mutual exclusion circuit (6) comprises a second phase inverter (U2), a third phase inverter (U4), a first OR gate (U3), and a second OR gate (U5); the output end of the first phase inverter (4) and an output end of the second phase inverter (U2) are both electrically connected to an input end of the second OR gate (U5), and an output end of the second OR gate (U5) is electrically connected to the input end of the first drive oscillation circuit (2) through the third phase inverter (U4); the first output end of the microprocessor (1) and an output end of the third phase inverter (U4) are both electrically connected to an input end of the first OR gate (U3), and an output end of the first OR gate (U3) is electrically connected to the input end of the second drive oscillation circuit (3) through the second phase inverter (U2).

2. The ultrasonic atomization sheet oscillation control circuit according to claim 1, further comprising a switching circuit (7) for controlling whether the first drive oscillation circuit (2) operates, wherein a second output end of the microprocessor (1) is electrically connected to a control end of the switching circuit (7), and an output end of the switching circuit (7) is electrically connected to the first drive oscillation circuit (2).

3. The ultrasonic atomization sheet oscillation control circuit according to claim 1, wherein the first drive oscillation circuit (2) comprises an amplifier (U1), a first resistor (R1), a first MOS transistor (Q1), a first inductor (L1), and a first capacitor (C1); the output end of the first phase inverter (4) is electrically connected to a first input end of the amplifier (U1), a first output end of the amplifier (U1) is electrically connected to a gate of the first MOS transistor (Q1) through the first resistor (R1), a source of the first MOS transistor (Q1) is grounded, and a drain of the first MOS transistor (Q1), one end of the first inductor (L1), and one end of the first capacitor (C1) are all electrically connected to the first end of the first ultrasonic atomization sheet (J1); the other end of the first inductor (L1) is electrically connected to a positive pole of a power supply, and the other end of the first capacitor (C1) is grounded.

4. The ultrasonic atomization sheet oscillation control circuit according to claim 1, wherein the second drive oscillation circuit (3) comprises an amplifier (U1), a second resistor (R2), a second MOS transistor (Q2), a second inductor (L2), and a second capacitor (C2); the output end of the microprocessor (1) is electrically connected to a second input end of the amplifier (U1), a second output end of the amplifier (U1) is electrically connected to a gate of the second MOS transistor (Q2) through the second resistor (R2), a source of the second MOS transistor (Q2) is grounded, and a drain of the second MOS transistor (Q2), one end of the second inductor (L2), and one end of the second capacitor (C2) are all electrically connected to the second end of the first ultrasonic atomization sheet (J1); the other end of the second inductor (L2) is electrically connected to the positive pole of the power supply, and the other end of the second capacitor (C2) is grounded.

5. The ultrasonic atomization sheet oscillation control circuit according to claim 1, further comprising a power module (5), wherein a power source end of the first drive oscillation circuit (2) and a power source end of the second drive oscillation circuit (3) are both electrically connected to an output end of the power module (5).

6. The ultrasonic atomization sheet oscillation control circuit according to claim 5, wherein the power module comprises a single lithium battery (501) and a boost module (502), an output end of the single lithium battery (501) is electrically connected to an input end of the boost module (502), and an output end of the boost module (502) is the output end of the power module (5).

7. The ultrasonic atomization sheet oscillation control circuit according to claim 2, wherein the switching circuit (7) comprises a third MOS transistor (Q3), a fourth MOS transistor (Q4), a third resistor (R3), a fourth resistor (R4) and a fifth resistor (R5), one end of the third resistor (R3) and a drain of the third MOS transistor (Q3) are both connected to the positive pole of the power supply, the other end of the third resistor (R3) and a gate of the third MOS transistor (Q3) are both connected to a drain of the fourth MOS transistor (Q4) through the fourth resistor (R4), a source of the third MOS transistor (Q3) is connected to the first drive oscillation circuit (2), a gate of the fourth MOS transistor (Q4) and one end of the fifth resistor (R5) are connected to the second output end of the microprocessor (1), and a source of the fourth MOS transistor (Q4) and the other end of the fifth resistor (R5) are both grounded.

8. The ultrasonic atomization sheet oscillation control circuit according to claim 1, further comprising a power module (5), wherein the power module (5) comprises a boost chip (U6), a third capacitor (C3), a fourth capacitor (C4), and a fifth capacitor (C5); an input end of the boost chip (U6) and one end of the third capacitor (C3) are both electrically connected to the positive pole of the power supply, and an output end of the boost chip (U6), one end of the fourth capacitor (C4), and one end of the fifth capacitor (C5) are all electrically connected to a power end of the amplifier (U1); and a ground end of the boost chip (U6), the other end of the third capacitor (C3), the other end of the fourth capacitor (C4), and the other end of the fifth capacitor (C5) are all grounded.

9. The ultrasonic atomization sheet oscillation control circuit according to claim 1, further comprising a second ultrasonic atomization sheet (J2) and a third drive oscillation circuit (8), wherein a third output end of the microprocessor (1) is electrically connected to a first end of the second ultrasonic atomization sheet (J2) through the third drive oscillation circuit (8), and a second end of the second ultrasonic atomization sheet (J2) is grounded.

10. The ultrasonic atomization sheet oscillation control circuit according to claim 9, further comprising a first power detection circuit (9) for detecting the operating power of the first ultrasonic atomization sheet (J1), wherein an output end of the first power detection circuit (9) is electrically connected to the first input end of the microprocessor (1).

11. The ultrasonic atomization sheet oscillation control circuit according to claim 9, further comprising a second power detection circuit (10) for detecting the operating power of the second ultrasonic atomization sheet (J2), wherein an output end of the second power detection circuit (10) is electrically connected to the second input end of the microprocessor (1).

12. An ultrasonic electronic cigarette, comprising the ultrasonic atomization sheet oscillation control circuit according to any one of claims 1 to 11.

## Patentansprüche

1. Oszillationssteuerungsschaltung für ein Ultraschallzerstäubungsblatt, mit einem Mikroprozessor (1), einer ersten Treiberoszillationsschaltung (2), einer zweiten Treiberoszillationsschaltung (3), einem ersten Phaseninverter (4) und einer wechselseitigen Ausschlussschaltung (6) zum Ausgeben von zwei Pfaden von Signalpegeln, die komplementär zueinander sind, wobei ein Ausgangsende der ersten Treiberoszillationsschaltung (2) elektrisch verbunden ist mit einem ersten Ende eines ersten Ultraschallzerstäubungsblatts (J1), ein Ausgangsende der zweiten Treiberoszillationsschaltung (3) elektrisch verbunden ist mit einem zweiten Ende des ersten Ultraschallzerstäubungsblatts (J1); ein Eingangsende des ersten Phaseninverters (4) und ein Eingangsende der zweiten Treiberoszillationsschaltung (3) beide elektrisch verbunden sind mit einem ersten Ausgangsende des Mikroprozessors (1), und ein Ausgangsende des ersten Phaseninverters (4) elektrisch verbunden ist mit einem Eingangsende der ersten Treiberoszillationsschaltung (2); das Ausgangsende des ersten Phaseninverters (4) durch die wechselseitige Ausschlussschaltung (6) elektrisch verbunden ist mit einem Eingangsende der ersten Treiberoszillationsschaltung (2), und das erste Ausgangsende des Mikroprozessors (1) durch die wechselseitige Ausschlussschaltung (6) elektrisch verbunden ist mit dem Eingangsende der zweiten Treiberoszillationsschaltung (3); **dadurch gekennzeichnet, dass**
die wechselseitige Ausschlussschaltung (6) einen zweiten Phaseninverter (U2), einen dritten Phaseninverter (U4), ein erstes ODER-Gatter (U3) und ein zweites ODER-Gatter (U5) aufweist; das Ausgangsende des ersten Phaseninverters (4) und ein Ausgangsende des zweiten Phaseninverters (U2) beide elektrisch verbunden sind mit einem Eingangsende des zweiten ODER-Gatter (U5), und ein Ausgangsende des zweiten ODER-Gatter (U5) durch den dritten Phaseninverter (U4) elektrisch verbunden ist mit dem Eingangsende der ersten Treiberoszillationsschaltung (2); das erste Ausgangsende des Mikroprozessors (1) und ein Ausgangsende des dritten Phaseninverters (U4) beide elektrisch verbunden sind mit einem Eingangsende des ersten ODER-Gatter (U3), und ein Ausgangsende des ersten ODER-Gatters (U3) durch den zweiten Phaseninverter (U2) elektrisch verbunden ist mit dem Eingangsende der zweiten Treiberoszillationsschaltung (3).

2. Oszillationssteuerungsschaltung für ein Ultraschallzerstäubungsblatt nach Anspruch 1, ferner mit einer Schaltschaltung (7) zum Steuern, ob die erste Treiberoszillationsschaltung (2) arbeitet, wobei ein zweites Ausgangsende des Mikroprozessors (1) elektrisch verbunden ist mit einem Steuerungsende der Schaltschaltung (7), und ein Ausgangsende der Schaltschaltung (7) elektrisch verbunden ist mit der ersten Treiberoszillationsschaltung (2).

3. Oszillationssteuerungsschaltung für ein Ultraschallzerstäubungsblatt nach Anspruch 1, bei der die erste Treiberoszillationsschaltung (2) einen Verstärker (U1), einen ersten Widerstand (R1), einen ersten MOS-Transistor (Q1), eine erste Spule (L1) und einen ersten Kondensator (C1) enthält; das Ausgangsende des ersten Phaseninverters (4) elektrisch verbunden ist mit einem ersten Eingangsende des Verstärkers (U1), ein erstes Ausgangsende des Verstärkers (U1) durch den ersten Widerstand (R1) elektrisch verbunden ist mit einem Gateanschluss des ersten MOS-Transistors (Q1), ein Sourceanschluss des ersten MOS-Transistors (Q1) geerdet ist, und ein Drainanschluss des ersten MOS-Transistors (Q1), ein Ende der ersten Spule (L1), und ein Ende des ersten Kondensators (C1) alle elektrisch verbunden sind mit dem ersten Ende des ersten Ultraschallzerstäubungsblatts (J1); das andere Ende der ersten Spule (L1) elektrisch verbunden ist mit einem positiven Pol einer Leistungsversorgung, und das andere Ende des ersten Kondensators (C1) geerdet ist.

4. Oszillationssteuerungsschaltung für ein Ultraschallzerstäubungsblatt nach Anspruch 1, bei der die zweite Treiberoszillationsschaltung (3) einen Verstärker (U1), einen zweiten Widerstand (R2), einen zweiten MOS-Transistor (Q2), eine zweite Spule (L2) und einen zweiten Kondensator (C2) enthält; das Ausgangsende des Mikroprozessors (1) elektrisch verbunden ist mit einem zweiten Eingangsende des Verstärkers (U1), ein zweites Ausgangsende des Verstärkers (U1) durch den zweiten Widerstand (R2) elektrisch verbunden ist mit einem Gateanschluss des zweiten MOS-Transistors (Q2), ein Sourceanschluss des zweiten MOS-Transistors (Q2) geerdet ist, und ein Drainanschluss des zweiten MOS-Transistors (Q2), ein Ende der zweiten Spule (L2) und ein Ende des zweiten Kondensators (C2) alle elektrisch verbunden sind mit dem zweiten Ende des ersten Ultraschallzerstäubungsblatts (J1); das andere Ende der zweiten Spule (L2) elektrisch verbunden ist mit dem positiven Pol der Leistungsversorgung, und das andere Ende des zweiten Kondensators (C2) geerdet ist.

5. Oszillationssteuerungsschaltung für ein Ultraschallzerstäubungsblatt nach Anspruch 1, ferner mit einem Leistungsmodul (5), wobei ein Leistungsversorgungsende der ersten Treiberoszillationsschaltung (2) und ein Leistungsversorgungsende der zweiten Treiberoszillationsschaltung (3) beide elektrisch verbunden sind mit einem Ausgangsende des Leistungsmoduls (5).

6. Oszillationssteuerungsschaltung für ein Ultraschallzerstäubungsblatt nach Anspruch 5, bei der das Leistungsmodul eine einzelne Lithiumbatterie (501) und ein Verstärkungsmodul (502) enthält, ein Ausgangsende der einzelnen Lithiumbatterie (501) elektrisch verbunden ist mit einem Eingangsende des Verstärkermoduls (502), und ein Ausgangsende des Verstärkungsmoduls (502) das Ausgangsende des Leistungsmoduls (5) ist.

7. Oszillationssteuerungsschaltung für ein Ultraschallzerstäubungsblatt nach Anspruch 2, bei der die Schaltschaltung (7) einen dritten MOS-Transistor (Q3), einen vierten MOS-Transistor (Q4), einen dritten Widerstand (R3), einen vierten Widerstand (R4) und einen fünften Widerstand (R5) enthält, ein Ende des dritten Widerstands (R3) und ein Drainanschluss des dritten MOS-Transistors (Q3) beide verbunden sind mit dem positiven Pol der Leistungsversorgung, das andere Ende des dritten Widerstands (R3) und ein Gateanschluss des dritten MOS-Transistors (Q3) beide durch den vierten Widerstand (R4) verbunden sind mit einem Drainanschluss des vierten MOS-Transistors (Q4), ein Sourceanschluss des dritten MOS-Transistors (Q3) verbunden ist mit der ersten Treiberoszillationsschaltung (2), ein Gateanschluss des vierten MOS-Transistors (Q4) und ein Ende des fünften Widerstands (R5) verbunden sind mit dem zweiten Ausgangsende des Mikroprozessors (1), und ein Sourceanschluss des vierten MOS-Transistors (Q4) und das andere Ende des fünften Widerstands (R5) beide geerdet sind.

8. Oszillationssteuerungsschaltung für ein Ultraschallzerstäubungsblatt nach Anspruch 1, ferner mit einem Leistungsmodul (5), wobei das Leistungsmodul (5) einen Verstärker-Chip (U6), einen dritten Kondensator (C3), einen vierten Kondensator (C4) und einen fünften Kondensator (C5) enthält; ein Eingangsende des Verstärker-Chips (U6) und ein Ende des dritten Kondensators (C3) beide elektrisch verbunden sind mit dem positiven Pol der Leistungsversorgung, und ein Ausgangsende des Verstärker-Chips (U6), ein Ende des vierten Kondensators (C4) und ein Ende des fünften Kondensators (C5) alle elektrisch verbunden sind mit einem Leistungsende des Verstärkers (U1); und ein Masseende des Verstärker-Chips (U6), das andere Ende des dritten Kondensators (C3), das andere Ende des vierten Kondensators (C4), und das andere Ende des fünften Kondensators (C5) alle geerdet sind.

9. Oszillationssteuerungsschaltung für ein Ultraschallzerstäubungsblatt nach Anspruch 1, ferner mit einem zweiten Ultraschallzerstäubungsblatt (J2) und einer dritten Treiberoszillationsschaltung (8), wobei ein drittes Ausgangsende des Mikroprozessors (1) durch die dritte Treiberoszillationsschaltung (8) elektrisch verbunden ist mit einem ersten Ende des zweiten Ultraschallzerstäubungsblatts (J2), und ein zweites Ende des zweiten Ultraschallzerstäubungsblatts (J2) geerdet ist.

10. Oszillationssteuerungsschaltung für ein Ultraschallzerstäubungsblatt nach Anspruch 9, ferner mit einer ersten Leistungsdetektionsschaltung (9) zum Detektieren der Betriebsleistung des ersten Ultraschallzerstäubungsblatts (J1), wobei ein Ausgangsende der ersten Leistungsdetektionsschaltung (9) elektrisch verbunden ist mit dem ersten Eingangsende des Mikroprozessors (1).

11. Oszillationssteuerungsschaltung für ein Ultraschallzerstäubungsblatt nach Anspruch 9, ferner mit einer zweiten Leistungsdetektionsschaltung (10) zum Detektieren der Betriebsleistung des zweiten Ultraschallzerstäubungsblatts (J2), wobei ein Ausgangsende der zweiten Leistungsdetektionsschaltung (10) elektrisch verbunden ist mit dem zweiten Eingangsende des Mikroprozessors (1).

12. Ultraschall-E-Zigarette, die die Oszillationssteuerungsschaltung für das Ultraschallzerstäubungsblatt nach einem der Ansprüche 1 bis 11 enthält.

## Revendications

1. Circuit de commande d'oscillation de feuille d'atomisation ultrasonore, comprenant un microprocesseur (1), un premier circuit d'oscillation d'entraînement (2), un deuxième circuit d'oscillation d'entraînement (3), un premier inverseur de phase (4), et un circuit d'exclusion mutuelle (6) pour délivrer deux trajets de niveaux de signaux qui sont complémentaires l'un de l'autre, dans lequel une extrémité de sortie du premier circuit d'oscillation d'entraînement (2) est connectée électriquement à une première extrémité d'une première feuille d'atomisation ultrasonore (J1), une extrémité de sortie du deuxième circuit d'oscillation d'entraînement (3) est connectée électriquement à une deuxième extrémité de la première feuille d'atomisation ultrasonore (J1) ; une extrémité d'entrée du premier inverseur de phase (4) et une extrémité d'entrée du deuxième circuit d'oscillation d'entraînement (3) sont toutes deux connectées électriquement à une première extrémité de sortie du microprocesseur (1), et une extrémité de sortie du premier inverseur de phase (4) est connectée électriquement à une extrémité d'entrée du premier circuit d'oscillation d'entraînement (2) ; l'extrémité de sortie du premier inverseur de phase (4) est connectée électriquement à l'extrémité d'entrée du premier circuit d'oscillation d'entraînement (2) par l'intermédiaire du circuit d'exclusion mutuelle (6), et la première extrémité de sortie du microprocesseur (1) est connectée électriquement à l'extrémité d'entrée du deuxième circuit d'oscillation d'entraînement (3) par l'intermédiaire du circuit d'exclusion mutuelle (6) ;
**caractérisé en ce que** le circuit d'exclusion mutuelle (6) comprend un deuxième inverseur de phase (U2), un troisième inverseur de phase (U4), une première porte OU (U3), et une deuxième porte OU (U5) ; l'extrémité de sortie du premier inverseur de phase (4) et une extrémité de sortie du deuxième inverseur de phase (U2) sont toutes deux connectées électriquement à une extrémité d'entrée de la deuxième porte OU (U5), et une extrémité de sortie de la deuxième porte OU (U5) est connectée électriquement à l'extrémité d'entrée du premier circuit d'oscillation d'entraînement (2) par l'intermédiaire du troisième inverseur de phase (U4) ; la première extrémité de sortie du microprocesseur (1) et une extrémité de sortie du troisième inverseur de phase (U4) sont toutes deux connectées électriquement à une extrémité d'entrée de la première porte OU (U3), et une extrémité de sortie de la première porte OU (U3) est connectée électriquement à l'extrémité d'entrée du deuxième circuit d'oscillation d'entraînement (3) par l'intermédiaire du deuxième inverseur de phase (U2).

2. Circuit de commande d'oscillation de feuille d'atomisation ultrasonore selon la revendication 1, comprenant en outre un circuit de commutation (7) pour commander si le premier circuit d'oscillation d'entraînement (2) fonctionne, dans lequel une deuxième extrémité de sortie du microprocesseur (1) est électriquement connectée à une extrémité de commande du circuit de commutation (7), et une extrémité de sortie du circuit de commutation (7) est électriquement connectée au premier circuit d'oscillation d'entraînement (2).

3. Circuit de commande d'oscillation de feuille d'atomisation ultrasonore selon la revendication 1, dans lequel le premier circuit d'oscillation d'entraînement (2) comprend un amplificateur (U1), une première résistance (R1), un premier transistor MOS (Q1), une première inductance (L1), et un premier condensateur (C1); l'extrémité de sortie du premier inverseur de phase (4) est connectée électriquement à une première extrémité d'entrée de l'amplificateur (U1), une première extrémité de sortie de l'amplificateur (U1) est connectée électriquement à une porte du premier transistor MOS (Q1) par l'intermédiaire de la première résistance (R1), une source du premier transistor MOS (Q1) est mise à la masse, et un drain du premier transistor MOS (Q1), une extrémité de la première inductance (L1), et une extrémité du premier condensateur (C1) sont tous électriquement connectés à la première extrémité de la première feuille d'atomisation ultrasonore (J1); l'autre extrémité de la première inductance (L1) est connectée électriquement à un pôle positif d'une alimentation électrique, et l'autre extrémité du premier condensateur (C1) est mise à la terre.

4. Circuit de commande d'oscillation de feuille d'atomisation ultrasonore selon la revendication 1, dans lequel le deuxième circuit d'oscillation d'entraînement (3) comprend un amplificateur (U1), une deuxième résistance (R2), un deuxième transistor MOS (Q2), une deuxième inductance (L2), et un deuxième condensateur (C2) ; l'extrémité de sortie du microprocesseur (1) est connectée électriquement à une deuxième extrémité d'entrée de l'amplificateur (U1), une deuxième extrémité de sortie de l'amplificateur (U1) est connectée électriquement à une porte du deuxième transistor MOS (Q2) par l'intermédiaire de la deuxième résistance (R2), une source du deuxième transistor MOS (Q2) est mise à la masse, et un drain du deuxième transistor MOS (Q2), une extrémité de la deuxième inductance (L2), et une extrémité du deuxième condensateur (C2) sont tous électriquement connectés à la deuxième extrémité de la première feuille d'atomisation ultrasonore (J1); l'autre extrémité de la deuxième inductance (L2) est connectée électriquement au pôle positif de l'alimentation électrique, et l'autre extrémité du deuxième condensateur (C2) est mise à la masse.

5. Circuit de commande d'oscillation de feuille d'atomisation ultrasonore selon la revendication 1, comprenant en outre un module de puissance (5), dans lequel une extrémité de source d'énergie du premier circuit d'oscillation d'entraînement (2) et une extrémité de source d'énergie du deuxième circuit d'oscillation d'entraînement (3) sont toutes deux connectées électriquement à une extrémité de sortie du module de puissance (5).

6. Circuit de commande d'oscillation de feuille d'atomisation ultrasonore selon la revendication 5, dans lequel le module de puissance comprend une batterie au lithium unique (501) et un module d'amplification (502), une extrémité de sortie de la batterie au lithium unique (501) est connectée électriquement à une extrémité d'entrée du module d'amplification (502), et une extrémité de sortie du module d'amplification (502) est l'extrémité de sortie du module de puissance (5).

7. Circuit de commande d'oscillation de feuille d'atomisation ultrasonore selon la revendication 2, dans lequel le circuit de commutation (7) comprend un troisième transistor MOS (Q3), un quatrième transistor MOS (Q4), une troisième résistance (R3), une quatrième résistance (R4) et une cinquième résistance (R5), une extrémité de la troisième résistance (R3) et un drain du troisième transistor MOS (Q3) sont tous deux connectés au pôle positif de l'alimentation électrique, l'autre extrémité de la troisième résistance (R3) et une porte du troisième transistor MOS (Q3) sont toutes deux connectées à un drain du quatrième transistor MOS (Q4) par l'intermédiaire de la quatrième résistance (R4), une source du troisième transistor MOS (Q3) est connectée au premier circuit d'oscillation d'entraînement (2), une porte du quatrième transistor MOS (Q4) et une extrémité de la cinquième résistance (R5) sont connectées à la deuxième extrémité de sortie du microprocesseur (1), et une source du quatrième transistor MOS (Q4) et l'autre extrémité de la cinquième résistance (R5) sont toutes deux mises à la masse.

8. Circuit de commande d'oscillation de feuille d'atomisation ultrasonore selon la revendication 1, comprenant en outre un module de puissance (5), dans lequel le module de puissance (5) comprend une puce d'amplification (U6), un troisième condensateur (C3), un quatrième condensateur (C4), et un cinquième condensateur (C5) ; une extrémité d'entrée de la puce d'amplification (U6) et une extrémité du troisième condensateur (C3) sont toutes deux connectées électriquement au pôle positif de l'alimentation électrique, et une extrémité de sortie de la puce d'amplification (U6), une extrémité du quatrième condensateur (C4), et une extrémité du cinquième condensateur (C5) sont toutes connectées électriquement à une extrémité de puissance de l'amplificateur (U1); et une extrémité de masse de la puce d'amplification (U6), l'autre extrémité du troisième condensateur (C3), l'autre extrémité du quatrième condensateur (C4), et l'autre extrémité du cinquième condensateur (C5) sont toutes mises à la masse.

9. Circuit de commande d'oscillation de feuille d'atomisation ultrasonore selon la revendication 1, comprenant en outre une deuxième feuille d'atomisation ultrasonore (J2) et un troisième circuit d'oscillation d'entraînement (8), dans lequel une troisième extrémité de sortie du microprocesseur (1) est connectée électriquement à une première extrémité de la deuxième feuille d'atomisation ultrasonore (J2) par l'intermédiaire du troisième circuit d'oscillation d'entraînement (8), et une deuxième extrémité de la deuxième feuille d'atomisation ultrasonore (J2) est mise à la masse.

10. Circuit de commande d'oscillation de feuille d'atomisation ultrasonore selon la revendication 9, comprenant en outre un premier circuit de détection de puissance (9) pour détecter la puissance de fonctionnement de la première feuille d'atomisation ultrasonore (J1), dans lequel une extrémité de sortie du premier circuit de détection de puissance (9) est connectée électriquement à la première extrémité d'entrée du microprocesseur (1).

11. Circuit de commande d'oscillation de feuille d'atomisation ultrasonore selon la revendication 9, comprenant en outre un deuxième circuit de détection de puissance (10) pour détecter la puissance de fonctionnement de la deuxième feuille d'atomisation ultrasonore (J2), dans lequel une extrémité de sortie du deuxième circuit de détection de puissance (10) est connectée électriquement à la deuxième extrémité d'entrée du microprocesseur (1).

12. Cigarette électronique ultrasonore, comprenant le circuit de commande d'oscillation de feuille d'atomisation ultrasonore selon l'une quelconque des revendications 1 à 11.
